Europäisches Patentamt

European Patent Office

Office européen des brevets

(11) Veröffentlichungsnummer: **0 183 039**
**B1**

# (12) EUROPÄISCHE PATENTSCHRIFT

(45) Veröffentlichungstag der Patentschrift:
30.08.89

(51) Int. Cl.⁴: **B 60 G 17/10**

(21) Anmeldenummer: 85113159.9

(22) Anmeldetag: 17.10.85

(54) **Verfahren und Vorrichtung zum Steuern der Dämpferhärte eines Stossdämpfers für Fahrzeuge.**

(30) Priorität: 27.11.84 DE 3443183

(43) Veröffentlichungstag der Anmeldung:
04.06.86 Patentblatt 86/23

(45) Bekanntmachung des Hinweises auf die Patenterteilung: 30.08.89 Patentblatt 89/35

(84) Benannte Vertragsstaaten:
DE FR GB IT

(56) Entgegenhaltungen:
DE—A— 3 303 293
FR—A— 1 117 141
GB—A— 1 328 409
GB—A— 2 111 171
PATENT ABSTRACTS OF JAPAN, Band 6, Nr. 267(M-182)[1145], 25. Dezember 1982; & JP - A - 57 158 111 (HINO JIDOSHA KOGYO) 29-09-1982
AUTOMOTIVE ENGINEER, Band 9, Nr. 1, Februar-März 1984, Seiten 56-57, Southend-on-Sea,GB; A. BAKER "Lotus' active suspension"

(73) Patentinhaber: ROBERT BOSCH GMBH
Postfach 50
D-7000 Stuttgart 1 (DE)

(72) Erfinder: Holzinger, Otto, Dr. Dipl.-Phys.
Sudetenstrasse 45
D-7321 Eschenbach (DE)
Erfinder: Domann, Helmut
Lohlenbachweg 3c
D-7250 Leonberg (DE)

## Beschreibung

Stand der Technik

Die Erfindung geht aus von einer Vorrichtung zum Steuern der Dampferhärte eines Stoßdämpfers nach der Gattung des Anspruches 1. Eine derartige Vorrichtung ist bekannt (GB-A-2 111 171).

Bei dieser bekannten Bauart sind einzelne Elektroden im Zylinder angeordnet und der Kolben taucht beim Einfedern in diese Elektroden ein und zieht sich beim Ausfedern aus diesen zurück. Dadurch verändern sich aber die Drosselstrecken. Außerdem ist die bekannte Bauart sehr vielteilig und teuer.

Der Erfindung liegt die Aufgabe zugrunde, diese Nachteile zu vermeiden und eine Vorrichtung der eingangs genannten Art zu schaffen, die einfach und preiswert ist und bei der sich die Drosselstrecken bei der Arbeit des Stoßdämpfers nicht verändern.

Diese Aufgabe wird gemäß der Erfindung bei einer gattungsgemäßen Vorrichtung durch die kennzeichnenden Merkmale des Anspruchs 1 gelöst.

Bei Federungssystemen der heute gebräuchlichen Fahrzeugtypen, insbesondere der Personen-Fahrzeuge, ist das Verhältnis von Federhärte zu Dämpferhärte auf einen mittleren Betriebsfall optimiert. Die Parameter werden konstruktiv festgelegt und bleiben, abgesehen von Alterungserscheinungen, im Fahrbetrieb unverändert. Bei extremen Betriebsfällen, z. B. Fahrzeug leer oder Fahrzeug voll beladen, sind solche Fahrzeuge bei weitem nicht optimal gefedert bzw. ist die Federung nicht optimal gedämpft. Diese Betriebsfälle sind vom Optimalen um so weiter entfernt, je größer das Gewichtsverhältnis zwischen leerem und maximal beladenem Fahrzeug ist.

Dazu kommt, daß aus Gründen der Treibstoff-Ersparnis und der Rohstoff-Ökonomie beim Entwurf neuer Fahrzeuge verstärkt eine Leichtbauweise angestrebt wird. Die mögliche Zuladung soll aber darunter nicht leiden. Das heißt, daß in Zukunft das oben genannte Gewichtsverhältnis noch größer und die Abstimmung von Federhärte/Dämpferhärte zunehmend schwieriger werden.

Die erfindungsgemäße Vorrichtung hat den Vorteil, daß die Dämpferhärte während des Fahrbetriebs kontinuierlich veränderbar ist und den Randbedingungen Beladung, Lastverteilung auf die Achsen, Fahrgeschwindigkeit, Beschleunigungen längs (Gasgeben oder Bremsen) und quer (Kurvenfahren) und Fahrbahnunebenheiten optimal und automatisch auf einfache Art und Weise schnell angepaßt werden kann, mit geringstem Energieaufwand und ohne den Einsatz von bewegten Teilen zur Drosselung des Flüssigkeitsstromes.

Durch die in den Ansprüchen 2 bis 6 aufgeführten Maßnahmen sind vorteilhafte Weiterbildungen und Verbesserungen der im Anspruch 1 angegebenen Vorrichtung möglich.

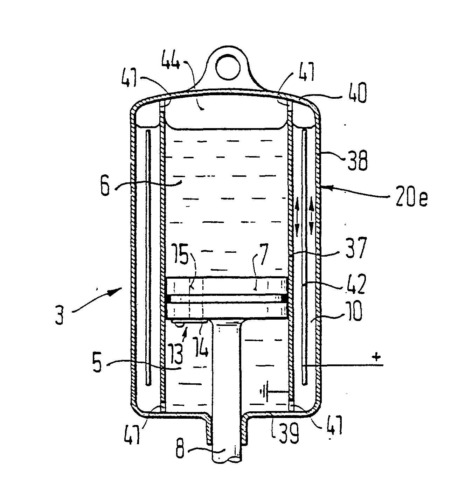

Ein Ausführungsbeispiel der Erfindung ist in der Zeichnung vereinfacht dargestellt und in der nachfolgenden Beschreibung näher erläutert.

Ein Stoßdämpfer 3 hat einen inneren Führungszylinder 37, der einen Kolben 7 aufnimmt. Der Führungszylinder 37 ist innerhalb eines Außenzylinders 38 mit radialem Abstand angeordnet. Der Außenzylinder 38 stellt die äußere Begrenzung des Stoßdämpfers 3 dar. Zwischen dem Führungszylinder 37 und dem Außenzylinder 38 wird ein eine Ausgleichsleitung 10 ergebender ringförmiger Strömungsquerschnitt für eine elektro-rheologische Flüssigkeit gebildet. Die Ausgleichsleitung 10 stellt eine verbindung zwischen den Arbeitskammern 5 und 6 unter und über dem Kolben 7 her. Hierzu ist der Führungszylinder 37 nahe an seinen an einem Bodenende 39 und an einem Deckelende 40 des Außenzylinders 38 liegenden Enden mit Durchbrüchen 41 versehen, die die Verbindung zwischen den Arbeitskammern 5, 6 und der ringförmigen Ausgleichsleitung 10 herstellen. Ein kapazitives Bauteil 20e ist bei dieser kompakten Bauweise der erfindungsgemäßen Vorrichtung derart gestaltet, daß der Führungszylinder 37 beispielsweise als an Masse liegende Elektrode dient und in den die Ausgleichsleitung 10 bildenden Ringquerschnitt zwischen Führungszylinder 37 und Außenzylinder 38 mit radialem Abstand zu diesen Zylindern 37, 38 ein Zwischenrohr 42 eingesetzt ist, das gegenüber dem Führungszylinder 37 isoliert an positiven potential liegt. In der oberen Arbeitskammer 6 des Stoßdämpfers 3 ist eine Luftblase 44 eingeschlossen, die als hydropneumatischer Speicher dient.

Als Flüssigkeit in den Arbeitskammern 5, 6, der Ausgleichsleitung 10 dient eine elektro-rheologische Flüssigkeit, die die Eigenschaft besitzt, daß sich ihre Viskosität durch das Anlegen elektrostatischer Feder verändern läßt. Bei derartigen elektro-rheologischen Flüssigkeiten handelt es sich in der Regel um Suspensionen kleiner partikel in Öl. Die Feldstärken der erforderlichen elektrostatischen Felder liegen bei wenigen kV/mm, beispielsweise 2 bis 4 kV/mm.

Um den Flüssigkeitsstrom zwischen den Arbeitskammern 5 und 6 mehr oder weniger zu drosseln und damit eine Dämpfung zu erzielen, ist Ausgleichsleitung 10 als Steuermittel ein kapazitives Bauteil 20e angeordnet, an dem, wie ein bekannter elektrischer Kondensator wirkend, ein elektrostatisches Feld anlegbar ist, dessen Feldstärke durch Anlegen einer von einer elektronischen Steuereinrichtung gelieferten Spannung änderbar ist, wodurch sich in entsprechender Weise die Viskosität der elektro-rheologischen Flüssigkeit und damit die über das kapazitive Bauteil 20e strömende Flüssigkeitsmenge ändert und die Dämpfungshärte beeinflußt wird. Der elektronischen Steuereinrichtung 21 werden Sensorsignale über Beschleunigung, Fahrgeschwindigkeit die über das kapazitive Bauteil 20e strömende Flüssigkeitsmenge ändert und die Dämpfungshärte beeinflußt wird. Der elektronischen Steuereinrichtung 21 werden Sensorsignale über Beschleunigung, Fahrgeschwindigkeit, Lenkeinschlag, Beladezustand u. a. eingegeben, die in der elektronischen Steuereinrichtung ausgewertet werden und zur Ansteuerung des kapazitiven Bauteiles 20e dienen. In gleicher Weise erfolgt durch die elektronische Steuereinrichtung eine Ansteuerung einer Förderpumpe zur Niveauregelung. So kann durch eine entsprechende Ansteuerung der Förderpumpe das Volumen in der oberen Arbeitskammer 6 vergrößert bzw. in der unteren Arbeitskammer 5 verkleinert werden, um das Niveau des Fahrzeugaufbaues gegenüber der Fahrzeugachse zu verändern.

Mittels des Ansteuersignales am kapazitiven Bauteil 20e kann so die vorrichtung auf verschiedene Weise genutzt werden :

1. Senkung der Dämpferhärte bei niedriger Fahrgeschwindigkeit.

2. Seitensymmetrische Beeinflussung der Dämpferhärte in Abhängigkeit von der gemessenen Fahrzeug-Querbeschleunigung oder -Querneigung (Wank-Regelung).

3. Vorder- und Hinterachsenbeeinflussung in Abhängigkeit von der Fahrzeug-Verzögerung bzw. -Beschleunigung (Nick-Regelung).

4. Beeinflussung der Federhärte in Abhängigkeit vom Beladungszustand (Niveauregelung).

5. Beeinflussung in Abhängigkeit vom Strassenzustand oder von der subjektiv gewünschten Abstimmung der (Federung/Dämpfung), z. B. komfortabel oder sportlich.

Die gewünschte Beeinflussung der Dämpferhärte erfolgt mittels der elektro-rheologischen Flüssigkeit und des kapazitiven Bauteils 20e sehr schnell, da die Steuerung keiner bewegten Teile bedarf.

## Patentansprüche

1. Vorrichtung zum Steuern der Dämpferhärte eines Stoßdämpfers für Fahrzeuge mit einer zwei mit Flüssigkeit gefüllte Arbeitskammern (5, 6) trennenden beweglichen Wand (7), an der eine eine der Arbeitskammern durchragende Betätigungsstange (8) angeift, und einem den Flüssigkeitsstrom in einer Verbindung zwischen den zwei Arbeitskammern beeinflussenden Steuermittel, wobei als Flüssigkeit eine elektrorheologische Flüssigkeit vorgesehen und durch ein als Steuermittel ausgebildetes kapazitives Bauteil (20, 20a, 20b, 20c, 20d, 20e) leitbar ist, dadurch gekennzeichnet, daß die Verbindung (10) zwischen den zwei Arbeitskammern (5, 6) durch einen Ringquerschnitt zwischen einem die bewegliche Wand (7) aufnehmenden Führungszylinder (37) und einem diesen mit radialem Abstand umgebenden Außenzylinder (38) gebildet wird und der Führungszylinder (37) als eine Elektrode und ein im Ringquerschnitt (10) zwischen Führungszylinder (37) und Außenzylinder (38) angeordnetes Zwischenrohr (42) als andere Elektrode des kapazitiven Bauteiles (20e) dient.

2. Vorrichtung nach Anspruch 1, dadurch gekennzeichnet, daß die der Betätigungsstange (8) abgewandte Arbeitskammer (6) mit einem hydropneumatischen Speicher (17) in Verbindung steht.

3. Vorrichtung nach Anspruch 2, dadurch gekennzeichnet, daß der hydropneumatische Speicher (44) innerhalb einer Arbeitskammer (6) gebildet wird.

4. Vorrichtung nach einem der Ansprüche 1 bis 3, dadurch gekennzeichnet, daß dem kapazitiven Bauteil (20, 20a, 20b, 20c, 20d, 20e) Steuersignale durch eine elektronische Steuereinrichtung (21) zuführbar sind, deren Eingangssignale (22, 23, 24, 25) von am Fahrzeug angebrachten Sensoren für Federung, Beschleunigung, Fahrgeschwindigkeit, Lenkeinschlag, Beladung und dergleichen erzeugbar sind.

5. Vorrichtung nach einem der Ansprüche 1 bis 4, dadurch gekennzeichnet, daß die der Betätigungsstange (8) abgewandte Arbeitskammer (6) mit einer Pumpe (18) zur Niveauregelung verbunden ist.

6. Vorrichtung nach einem der Ansprüche 1 bis 5, dadurch gekennzeichnet, daß in der beweglichen Wand (7) ein zur die Betätigungsstange (8) aufnehmenden Arbeitskammer (5) hin öffnendes Einwegventil (13) angeordnet ist.

## Claims

1. Device for controlling the damping stiffness of a shock absorber for vehicles, having a movable partition (7), which separates two operational chambers (5, 6) filled with fluid and on which acts an actuation rod (8) penetrating one of the operational chambers, and having a control means influencing the fluid flow in a connection between the two operational chambers, an electrorheological fluid being provided as the fluid and made controllable by a capacitive component designed as the control means (20, 20a, 20b, 20c, 20d, 20e), characterized in that the connection (10) between the two operational chambers (5, 6) is formed by an annular cross-section between a guide cylinder (37) accepting the movable partition (7) and an outer cylinder (38) surrounding this guide cylinder at a radial distance and that the guide cylinder (37) acts as one electrode and an intermediate tube (42) located in the annular cross-section (10) between the guide cylinder (37) and the outer cylinder (38) acts as the other electrode of the capacitive component (20e).

2. Device according to Claim 1, characterized in that the operational chamber (6) remote from the actuation rod (8) is connected to a hydro-pneumatic accumulator (17).

3. Device according to Claim 2, characterized in that the hydro-pneumatic accumulator (44) is formed within one operational chamber (6).

4. Device according to one of Claims 1 to 3, characterized in that the capacitive component (20, 20a, 20b, 20c, 20d, 20e) can be supplied with control signals by means of an electronic control device (21) whose input signals (22, 23, 24, 25) can be generated by sensors, attached to the vehicle, for springing, acceleration, travelling speed, steering lock, load and the like.

5. Device according to one of Claims 1 to 4, characterized in that the operational chamber (6) remote from the actuation rod (8) is connected to a pump (18) for level control.

6. Device according to one of Claims 1 to 5, characterized in that a one-way valve (13) opening towards the operational chamber (5) accepting the actuation rod (8) is located in the movable partition (7).

## Revendications

1. Dispositif de commande de la force d'amortissement d'un amortisseur de véhicule comprenant une paroi (7) séparant deux chambres de travail (5, 6) remplies d'un liquide sur lequel s'engage une des tiges d'actionnement (8) traversant une des deux chambres de travail, et un moyen de commande agissant sur le flux de liquide dans une jonction entre les deux chambres de travail, ou on utilise, comme liquide, un liquide électro-rhéologique et par un composant capacitif constitué comme moyen de commande (20, 20a, 20b, 20c, 20d, 20e) qui peut être dirigé, caractérisé en ce que la communication (10) entre les deux chambres (5, 6) est formée par une section transversale annulaire entre un cylindre de guidage (37) recevant la paroi mobile (7) et un cylindre extérieur (38) entourant ce cylindre de guidage (37) avec un intervalle et le cylindre de guidage (37) sert comme l'une des électrodes pour le composant capacitif et un tube intermédiaire (42) placés dans la section transversale annulaire entre le cylindre de guidage (37) et le cylindre extérieur (38) sert comme l'autre électrode du composant capacitif (20e).

2. Dispositif selon la revendication 1, caractérisé en ce que la chambre de travail (6) tournée vers la tige d'actionnement (8) est en relation avec un accumulateur hydro-pneumatique (44).

3. Dispositif selon la revendication 2, caractérisé en ce que l'accumulateur hydropneumatique (44) est formé à l'intérieur d'une chambre de travail (6).

4. Dispositif selon l'une des revendications 1 à 3, caractérisé en ce que des signaux de commande peuvent être transmis au composant capacitif (20, 20a, 20b, 20c, 20d, 20e) par un dispositif de régulation (21) dont les signaux d'entrée (22, 23, 24, 25) peuvent être engendrés par des capteurs placés sur le véhicule pour la suspension, l'accélération, la vitesse de conduite, la direction, la charge et analogues.

5. Dispositif selon l'une des revendications 1 à 4, caractérisé en ce que la chambre de travail (6) tournée vers la tige de commande est reliée pour le réglage de la garde au sol à l'aide d'une pompe (18).

6. Dispositif selon l'une des revendications 1 à 5, caractérisé en ce que dans la paroi mobile (7) est placé un clapet anti-retour (13) s'ouvrant vers la chambre de travail (5) recevant la tige d'actionnement (8).